# EUROPEAN PATENT APPLICATION

(11) **EP 2 204 742 A1**
(43) Date of publication of application: **07.07.2010**
(21) Application number: 08834493.2
(22) Date of filing: 25.09.2008
(51) Int. Cl.: G06F 13/00, G06F 17/30

(54) **SERVICE PROVIDING METHOD, SERVICE PROVIDING SYSTEM, TERMINAL, INFORMATION MANAGEMENT DEVICE, SERVER, AND PROGRAM**

(30) Priority: 26.09.2007 JP 2007248358
(71) Applicant: Nec Corporation, Tokyo 108-8001 (JP)
(72) Inventor: OCHIAI, Katsuhiro, Tokyo 108-8001 (JP)
(74) Representative: Glawe, Delfs, Moll
(86) International application number: PCT/JP2008/067277
(87) International publication number: WO 2009/041483

(57) **Abstract**

It is possible to provide a personalize service for users and a personalize service for each of the terminals owned by users by considering a profile unique to each of the terminals owned by the users and a common profile of respective terminals owned by one user. In response to a service execution request from a terminal, a service is provided according to the unique profile unique to the terminal and a common profile common to all the terminals owned by the user having the aforementioned terminal.

## Description

### [TECHNICAL FIELD]

The present invention relates to a service providing method, a service providing system, a terminal, an information management apparatus, a server, and a program for implementing a personalized service.

### [BACKGROUND ART]

Techniques for implementing personalized services in webs or on televisions pertaining to the present invention include the following:

Patent Document 1 discloses a data sharing apparatus for sharing data among a plurality of servers to thereby allow the servers to share a profile of a user.

Patent Document 2 discloses a storage device accessible by terminals in common to allow the terminals to store user operations made during watching/listening a program as local preference information and share it.

Patent Document 1: JP-P1999-265344A
Patent Document 2: JP-P2007-094738A

### [DISCLOSURE OF THE INVENTION]

### [PROBLEMS TO BE SOLVED BY THE INVENTION]

These techniques, however, do not take account of a profile unique to each terminal owned by a user and a profile common to the terminals, resulting in a problem that although the techniques enable personalization specific to that user, they do not allow for provision of personalized services different depending upon terminals owned by the user.

The method disclosed in Patent Document 1 records a different profile for a different terminal used by a user, and therefore, when the user obtains a plurality of services using different terminals or in different connection environments depending upon circumstances, the method cannot incorporate details of a service that the user has obtained at another terminal owned by the user.

The method disclosed in Patent Document 2 involves storing local preference information, and it is not for providing a service specific to a user referring to a profile unique to each terminal owned by the user and a profile common to the terminals.

The present invention has been made in view of such a problem, and its object is to provide a technique for implementing a personalized service taking account of a profile unique to each terminal owned by the user and a profile common to the terminals.

### [MEANS FOR SOLVING THE PROBLEMS]

The present invention for solving the aforementioned problem is a service providing method, characterized in that the method comprises a service providing step of providing a service in response to a service providing request from a terminal based on a unique profile that is information on a service to be provided uniquely at the above-described terminal and a common profile that is information on a service to be provided in common at all terminals owned by a user who is an owner of the above-described terminal.

The present invention for solving the aforementioned problem is a service providing system, characterized in that the system comprises a service provider for providing a service in response to a service providing request from a terminal based on a unique profile that is information on a service to be provided uniquely at the above-described terminal and a common profile that is information on a service to be provided in common at all terminals owned by a user who is an owner of the above-described terminal.

The present invention for solving the aforementioned problem is a server, characterized in that the server comprises a service provider for providing a service in response to a service providing request from a terminal based on a unique profile that is information on a service to be provided uniquely at the above-described terminal and a common profile that is information on a service to be provided in common at all terminals owned by a user who is an owner of the above-described terminal.

The present invention for solving the aforementioned problem is an information management apparatus, characterized in that the apparatus comprises a notification module for notifying, in response to a service providing request from a terminal, a unique profile that is information on a service to be provided uniquely at the above-described terminal and a common profile that is information on a service to be provided in common at all terminals owned by a user who is an owner of the above-described terminal, to a server for providing a service to the above-described terminal.

The present invention for solving the aforementioned problem is a terminal, characterized in that the terminal comprises a transmitter for transmitting a unique profile that is information on a service to be provided uniquely at his or her own terminal and a common profile that is information on a service to be provided in common at all terminals owned by a user who is an owner of his or her own terminal, to a server for providing the above-described service to his or her own terminal.

The present invention for solving the aforementioned problem is a program for a server, characterized in that the above-described program causes the above-described server to execute processing of providing a service in response to a service providing request from a terminal based on a unique profile that is information on a service to be provided uniquely at the above-described terminal and a common profile that is information on a service to be provided in common at all terminals owned by a user who is an owner of the above-described terminal.

The present invention for solving the aforementioned problem is a program for an information management apparatus, characterized in that the above-described program causes the above-described information management apparatus to execute processing of notifying, in response to a service providing request from the above-described terminal, a unique profile that is information on a service to be provided uniquely at the above-described terminal and a common profile that is information on a service to be provided in common at all terminals owned by a user who is an owner of the above-described terminal, to a server for providing a service to the above-described terminal.

The present invention for solving the aforementioned problem is a program for a terminal, characterized in that the above-described program causes the above-described terminal to execute processing of transmitting a unique profile that is information on a service to be provided uniquely at his or her own terminal and a common profile that is information on a service to be provided in common at all terminals owned by a user who is an owner of his or her own terminal, to a server for providing the above-described service to his or her own terminal.

### [EFFECTS OF THE INVENTION]

An effect of the present invention is in that a personalized service is achieved while taking account of a profile unique to each terminal owned by a user and a profile common to the terminals.

### [BRIEF DESCRIPTION OF THE DRAWINGS]

[FIG. 1] A block diagram showing a configuration of a first embodiment for practicing the present invention.
[FIG. 2] A process flow chart of the first embodiment for practicing the present invention.
[FIG. 3] A block diagram showing a configuration of one example of the present invention.
[FIG. 4] A process flow chart of the example of the present invention.

### [EXPLANATION OF SYMBOLS]

101 Profile management means
102 Communication relay means
103 Profile storing means
104 Profile providing means
105 Common profile
106 Unique profile
107, 108 Server
109, 110 Terminal
111 - 114 External communication path
301 Profile management apparatus
302 Communication relay module
303 Profile storing module
304 Profile providing module
305 Common profile
306 Unique profile
307 Shopping server
308 DVD rental server
309 PC
310 IPTV image receiver
311, 312 WAN
313, 314 LAN

### [BEST MODES FOR CARRYING OUT THE INVENTION]

Now an overview of the present invention will be described. Exemplary configurations, operations or the like of embodiments for practicing the present invention will be described in detail later.

The present invention involves storing a unique profile unique to a terminal used by a user and a common profile common to the terminals as information for providing a service suited to the user, that is, as a profile serving as preference information for the user or setting information set by the user, wherein, when providing a service, a server for providing a service to a user provides a service having details according to a profile unique to a terminal currently used by the user and a profile common to the terminals. Specifically, the present invention is mainly directed to storing a profile unique to each terminal owned by a user who uses a plurality of terminals, storing a profile common to the terminals, and providing the unique profile and common profile in combination to the server in response to a request by a server for providing a service.

Next, the best mode for practicing the present invention will be described in detail with reference to the accompanying drawings.

### (First Embodiment)

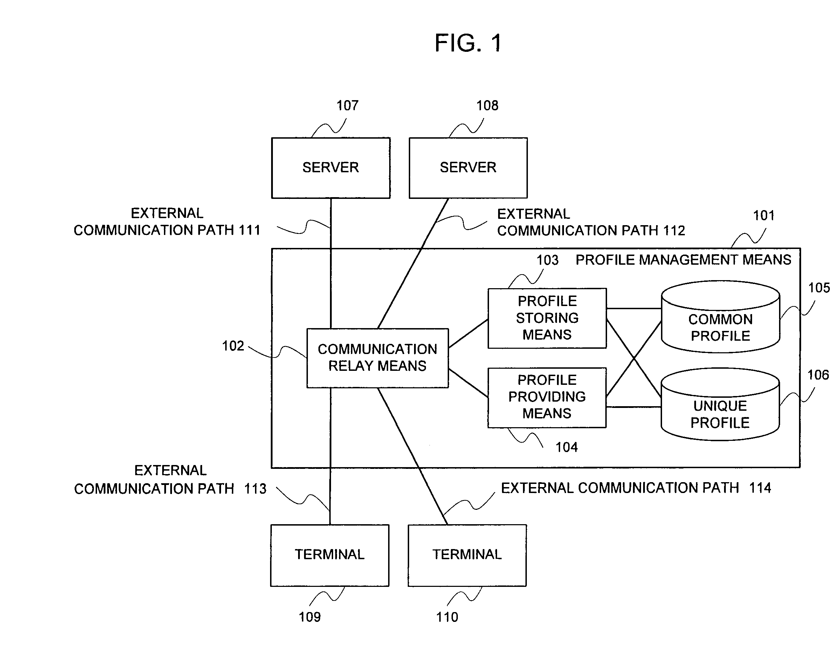

An exemplary configuration of a first embodiment will now be described. FIG. 1 is a block diagram showing the first embodiment. A profile management system has profile management means 101, and the profile management means 101 is comprised of communication relay means 102, profile storing means 103, profile providing means 104, a common profile 105, and a unique profile 106. The profile management means is provided for each user.

The communication relay means 102 is connected with the profile storing means 103 and with the profile providing means 104; the profile storing means 103 is connected with the common profile 105 and with the unique profile 106; and the profile providing means 104 is connected with the common profile 105 and with the unique profile 106. The communication relay means 102 is connected with a server 107 via an external communication path 111, with a server 108 via an external communication path 112, with a terminal 109 via an external communication path 113, and with a terminal 110 via an external communication path 114.

For the sake of explanation, it is assumed here that the terminals 109 and 110 are owned by the same user. It is also assumed that the server 107 does not recognize the presence of the server 108, and vice versa (not shown).

Next, the elements making up the profile management means 101 will be described one by one. First, the communication relay means 102 will be described. The communication relay means 102 relays a personalized processing request made when a user desires to obtain a personalized service, from a terminal owned by the user to a server for providing the service. Moreover, on receipt of a request for a profile of the terminal that transmitted the personalized processing request from the server, the communication relay means 102 transmits the received request to the profile providing means 104. Furthermore, on receipt of a result of the personalized processing and profile from the server, the communication relay means 102 transmits the received result of the personalized processing to the terminal that transmitted the personalized processing request, and transmits the received profile to the profile storing means 103.

The profile storing means 103 will now be described. On receipt of the profile from the communication relay means 102, the profile storing means 103 classifies the received profile into a profile common to the terminals owned by the user and a profile unique to each terminal, and stores the common profile into the common profile 105 and the unique profile into the unique profile 106. Classification of a profile may be made by, for example, using rules of classification stored beforehand in the profile storing means 103, or by classifying profiles by training. These methods are presented merely by way of example and shall not be construed as limiting.

The profile providing means 104 will now be described. On receipt of a request for a profile from the communication relay means 102, the profile providing means 104 decomposes the request into a request for a profile common to the terminals owned by the user and a request for a profile unique to each terminal, and reads a common profile from the common profile 105 and a unique profile from the unique profile 106 corresponding to the respective requests. Decomposition of a request may be made by, for example, using rules of decomposition stored beforehand in the profile providing means 104, or by classifying a request by training. These methods are presented merely by way of example and shall not be construed as limiting. The profile providing means 104 creates a profile (service profile) requested by the communication relay means 102 from the read common profile and unique profile, and transmits it to the communication relay means 102.

The common profile 105 will now be described. The common profile 105 stores therein a profile common to the terminals owned by the user.

The unique profile 106 will now be described. The unique profile 106 stores therein a profile unique to each terminal owned by the user along with associated identification information for the terminal.

Next, the servers 107, 108 will now be described. The servers 107, 108 are those administered by service providers who provide personalized services. The servers 107, 108 receive from the communication relay means 102 a personalized processing request by a terminal owned by a user who desires to obtain a personalized service. When the received processing request contains an item applicable to personalized processing unique to the user or to the terminal, the servers 107, 108 make a request for a profile of the terminal that transmitted the processing request, to the communication relay means 102. Moreover, on receipt of the requested profile from the communication relay means 102, the servers 107, 108 execute personalized processing based on the received profile, and transmit a result of the personalized processing and a profile updated according to the result of the processing to the communication relay means 102.

The profiles referred to by the servers 107, 108 in executing personalized service processing include a profile unique to each terminal and a profile common to the terminals as described above, wherein the unique profile represents information dependent upon each terminal and the common profile represents information independent from each terminal.

Next, the terminals 109, 110 will now be described. When a user who is using the terminals 109, 110 desires to obtain a personalized service, the terminals 109, 110 transmit a personalized processing request for a server for providing the service to the communication relay means 102. Moreover, the terminals 109, 110 receive a result of the requested personalized processing from the communication relay means 102, and displays the result to the user who is using the terminals.

Next, an operation of the first embodiment will now be described.

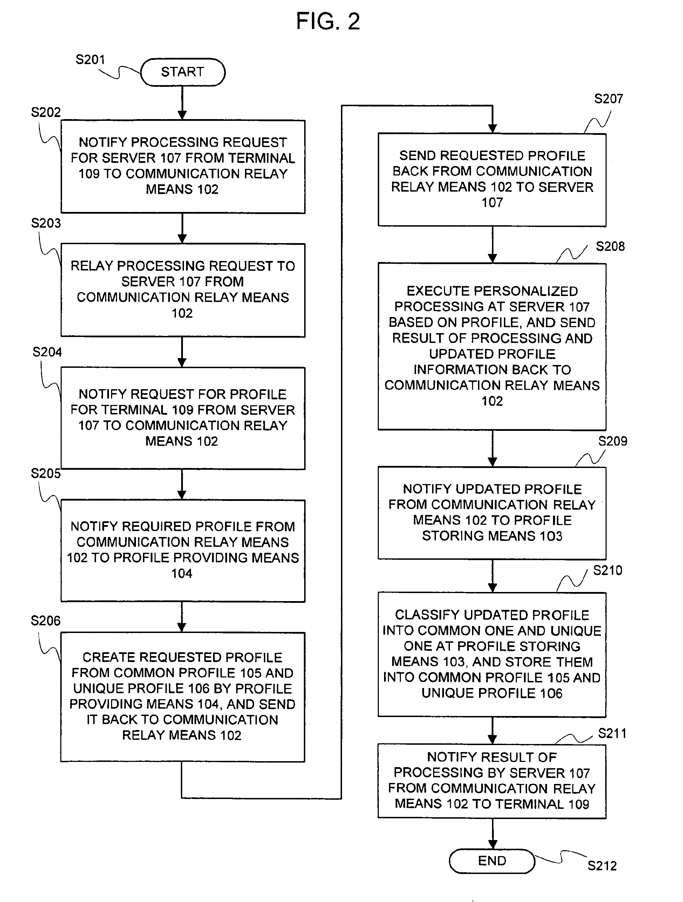

FIG. 2 is a flow chart of the whole system shown in FIG. 1. When the system starts processing (S201), the terminal 109 notifies a request for processing by the server 107 to the communication relay means 102 (S202). The notification of a request for processing by the server 107 here contains identification information for the terminal 109 that transmitted the notification of a request for processing.

Next, the communication relay means 102 relays the received processing request to the server 107 (S203). In a case that the processing request received by the server 107 contains an item applicable to personalized processing unique to the user or to the terminal 109, the server 107 transmits a request for a profile of the terminal 109 to the communication relay means 102 (S204). At S204, the request for a profile of the terminal 109 contains the identification information for the terminal 109 included in the processing request received by the server 107.

The communication relay means 102 notifies the request for a profile received from the server 107 to the profile providing means 104 (S205). The profile providing means 104 decomposes the request into a request for a profile common to the terminals owned by the user who is using the terminal 109, and a request for a profile unique to the terminal 109, and reads a common profile and a unique profile from the common profile 105 and unique profile 106, respectively, corresponding to the respective requests based on the identification information for the terminal. The profile providing means 104 creates a profile (service profile) requested by the server 107 from the read profiles, and sends it back to the communication relay means 102 (S206). The profile created here contains the identification information for the terminal.

The communication relay means 102 sends the profile sent back from the profile providing means 104 back to the server 107 (S207). The server 107 executes personalized processing based on the sent-back profile, and transmits a result of the processing and a profile updated by the personalized processing to the communication relay means 102 (S208).

The communication relay means 102 notifies the updated profile to the profile storing means 103 (S209). The profile storing means 103 classifies the updated profile into a profile common to the terminals owned by the user and a profile unique to the terminal 109, and stores the common profile into the common profile 105 and the unique profile into the unique profile 106 (S210).

The communication relay means 102 notifies the result of the personalized processing transmitted by the server 107 to the terminal 109 (S211), and the processing is terminated (S212).

In a case that the terminal 110 subsequently makes a personalized processing request to the server 107, the communication relay means 102 transmits, on receipt of a request for a profile of the terminal 110 from the server 107, the received request to the profile providing means 104, which in turn reads a profile common to the terminals from the common profile 105 and a profile unique to the terminal 110 from the unique profile 106, and creates a profile of the terminal 110 from the read common profile and unique profile corresponding to the received request. When creating a profile, the profile providing means 104 uses a profile updated when the result of the previous request made by the terminal 109 was sent back as a profile common to the terminals used by the user who owns the terminal 109 and terminal 110, while it uses a profile unique to the terminal 110 by reading it from the unique profile 106 as the profile unique to the terminal 110 without using the aforementioned profile unique to the terminal 109. Thus, upon a processing request from the terminal 110 to the server 107, the profile providing means 104 creates a requested profile from the profile common to the terminals used by the user and the profile unique to the terminal 110, and transmits it to the server 107 via the communication relay means 102. The server 107 uses the thus-transmitted profile, and is thereby enabled to execute personalized processing for the terminal 110 different from that for the terminal 109, that is, personalized processing different from terminal to terminal (not shown).

Moreover, in a case that the same terminal 109 successively makes processing requests to the server 107 and to the server 108, the profile providing means 104 uses, when creating a profile to be provided to the servers, the common profile 105 and unique profile 106 in common irrespective of to which server the profile is to be provided, so that it is possible to incorporate a result of personalized processing executed by one server into personalized processing executed by the other server (not shown).

Furthermore, in a case that the terminal 109 makes a processing request to the server 107 following the terminal 110 making a processing request to the server 108, a profile common to the terminals is provided to the servers from the common profile 105, and profiles unique to the terminals 109 and 110 are provided to the servers from the unique profile 106; therefore, even for processing with a changed server and a changed terminal, it is possible to incorporate a result of personalized processing into the other personalized processing by the changed server and terminal (not shown).

According to the first embodiment, for a plurality of terminals owned by a user, a personalized service can be provided according to a profile unique to each terminal owned by the user and a profile common to the terminals. This is because, by storing a profile unique to each terminal, storing a profile common to the terminals, and providing a service provider with the unique profile and common profile, the service provider can determine details of a service to be provided based on the unique profile and common profile.

In the first embodiment, an environment in which a terminal is used may be stored for use in the unique profile 106 as the profile unique to each terminal. For example, in a situation that the terminal 109 is connected in broadband and the terminal 110 is connected in narrowband, the difference in connection environment may be stored for use in the unique profile 106. While the connection environment for a terminal connected to a network is presented in this example, details in a profile unique to a terminal are not limited thereto.

According to the configuration described above, it is possible to provide a content optimized according to a usage condition of a terminal of a user or an environment in which the terminal of the user is used. For example, a connection environment for each terminal may be stored as a profile unique to each terminal to thereby allow a service provider to select a content according to the amount of data downloadable by each terminal per unit time, the amount of data displayable by each terminal, or the like, and distribute the selected content to each terminal, so that the user can enjoy the content while eliminating a stress by unnecessarily waiting for downloading of the content.

Moreover, the current position of a terminal may be stored as a profile unique to each terminal, and then, it may become possible that, when a user desires to know information on a shop near the current position, for example, a service according to the current position can be provided.

Furthermore, a plurality of the profile management means 101 may be present in a network and each profile management means may share the common profile 105 and/or unique profile 106 together via the network. For example, assume a case in which terminals connectable to different kinds of networks are owned by one user such that the terminal 109 is connected via an ADSL and the terminal 110 is connected via a cell phone network. In this case, profile management means for managing the profile of the terminal 109 and that for managing the profile of the terminal 110 are disposed in respective carrier networks, wherein these profile management means share the common profile 105 together but do not share the unique profile 106, whereby service providers each can use the profile common to the terminals used by the user and connected to different kinds of networks and the profile unique to each terminal, for personalization in their services.

According to such a configuration, in a case that a user owns a plurality of terminals and obtains a plurality of services using different terminals or in different connection environments for the terminals depending upon circumstances, a plurality of service providers may share a profile common to the plurality of terminals owned by the user without preparing a user profile for each terminal or for each service. Therefore, for example, when one terminal connected to a network is obtaining a service for the network, it is possible to take account of information that another terminal connected to a different kind of network has obtained a service for the network.

Moreover, for example, in a case that one user has a PC and a mobile terminal, and has obtained a PC-oriented service for DVD rental by the PC connected to the Internet, when determining details of a mobile terminal-oriented service to be provided to the mobile terminal connected to a mobile telephone network, the service provider may take account of information that the user has obtained the PC-oriented service for DVD rental, to thereby provide an advertisement of products related to the DVD rented via the PC.

Furthermore, since service providers share the common profile 105 and/or unique profile 106 together via a network, it is possible, when providing such a personalized service, to avoid a risk that a service that a user desires to obtain cannot be provided because part of the user's profiles disappears or becomes unavailable due to a reason such as bankruptcy of a specific service provider.

The profile management means 101 may be configured for use by a plurality of users. In such a case, the profile storing means 103 and profile providing means 104 should identify which terminal belongs to which user. This is achieved by the following process: the unique profile 106 stores therein, for each user of a terminal, identification information for the user, associated with identification information for the terminal used by the user and information unique to the terminal specified for each user; the common profile 105 stores therein, for each user of a terminal, identification information for the user, associated with a profile common to the terminals specified for each user; moreover, the notification of a processing request at S202 described above is configured to include the identification information for the terminal that transmitted the notification of the processing request and identification information for the user who is using the terminal; and at S204, a request for a profile of the terminal that made the notification of the processing request is configured to include the identification information for the terminal and identification information for the user who is using the terminal. This is presented merely by way of example and shall not be construed as limiting; for example, the aforementioned associated data may be included anywhere in the profile management means 101.

According to such a configuration, the profile management means 101 may be installed in each home, and the profile management means 101 may be shared among members of a family. Moreover, the profile management means 101 may be administered by a profile management service provider to allow users and service providers to access the profile management means 101, and the profile management service provider can thus administer profiles together.

In the aforementioned configuration, in a case that a terminal is shared by a plurality of users, the notification of a processing request at S202 described above may be configured to include identification information for the terminal that transmitted the notification of the processing request and identification information for the plurality of users who are using the terminal.

According to such a configuration, for example, a service provider can select a preference common to the plurality of users from a profile common to terminals respectively owned by the plurality of users and a profile unique to the shared terminal, and provide a service according to the selected preference.

In the first embodiment, a user may specify coverage of provision of a profile common to terminals owned by the user and a profile unique to each terminal, and store the coverage of provision specified by the user in the profile providing means 104 beforehand. For example, implementation may be made such that a profile regarding "preference" may be provided to any server without limitation, whereas a profile regarding "credit information" may be provided to a server specified by the user beforehand. More particularly, the implementation may be made such that the profile providing means 104 stores provision permission/non-permission information that defines permission/non-permission of provision of each profile to a server for each server, the profile providing/storing means 104 decides, when providing a profile created by the profile providing means 104 to a server, whether to provide the profile based on the provision permission/non-permission information for that server, and if decision is made to provide the profile, the profile providing means 104 transmits the profile to the server.

Alternatively, implementation may be made such that each time the profile providing means 104 provides a profile, a dialog for confirming whether to provide the profile is presented to a user who owns the terminal through the communication relay means 102 and via the terminal 109 or terminal 110 to prompt the user to decide provision permission/non-permission. More particularly, the implementation may be made such that the profile providing means 104 transmits to a terminal a transmission request for profile provision approval information indicating the provision permission/non-permission for a profile for the server to which the profile is to be provided; the terminal that has received the transmission request for the profile provision approval information sends profile provision approval information according to the received transmission request back to the profile providing means 104; the profile providing means 104 decides whether to provide the profile based on the sent-back profile provision approval information; and if the profile providing means 104 decides to provide the profile, it transmits the profile to the server.

Furthermore, there may be provided profile provision history storage means in the profile providing means 104 for, when providing a profile to a server, revealing when and which profile has been sent to which server, and the stored history may be notified to the user of the terminal 109 and terminal 110. Information stored in the profile provision history storage means may be stored as, for example, a profile provided by the profile providing means 104 associated with identification information for a server to which the profile is provided and identification information for the terminal 109 or terminal 110. This is presented merely by way of example and the information is not limited thereto. The time when to make the notification may be at the provision, at a request from the user, or at a specified date and time or on a specified day of the week. The profile provision history storage means may be included in the communication relay means 102 or anywhere in the profile management means 101, rather than in the profile providing means 104. This is presented merely by way of example and is not limited to the configuration described above; the means may be implemented in any networked apparatus. Moreover, the time when to make the notification is not limited to that presented above.

Likewise, there may be provided profile storage history storage means in the profile storing means 103 for, when storing an updated profile notified by a server, revealing when, by which server and what updating has been made, and the stored history may be notified to the user of the terminal 109 and terminal 110. Information stored in the profile storage history storage means may be stored as, for example, an updated unique profile associated with identification information for a server that notified the unique profile and identification information for a terminal corresponding to the unique profile, or an updated common profile associated with identification information for a server that notified the common profile. This is presented merely by way of example, and the information is not limited thereto. The time when to make the notification may be at the storage, at a request from the user, or at a specified date and time or on a specified day of the week. The storing means may be included in the communication relay means 102 or anywhere in the profile management means 101, rather than in the profile storing means 103. This is presented merely by way of example and is not limited to the configuration described above; the means may be implemented in any networked apparatus. Moreover, the time when to make the notification is not limited to that presented above.

According to such a configuration, an individual user profile for use in providing a personalized service can be used at the discretion of the user, and the user can know which service provider creates and uses what user profile for personalization, thus eliminating concern about personal information management and enhancing transparency of personal information.

It should be noted that the common profile 105 and unique profile 106 may be configured in an apparatus separate from the profile management means 101, or the unique profile 106 may be disposed in each terminal owned by a user.
When the common profile 105 and unique profile 106 are configured in the profile management means 101, for example, in a case that the profile management means 101 is installed in a home for use, not only a profile for the user but also those for members of a family can be managed in the home, thus making it possible to enhance transparency of personal information.
When the common profile 105 and unique profile 106 are configured in an apparatus separate from the profile management means 101, for example, in a case that the common profile 105 and unique profile 106 are administered by a profile management service provider and the profile management means 101 is installed in a home for use, protection of personal information against leakage is not needed in the home because no personal information is kept in the home.
This is presented merely by way of example and is not limited to the configuration described above, and the means may be implemented in any networked apparatus.

### (Second Embodiment)

An exemplary configuration of a second embodiment will now be described. The second embodiment has components similar to those in the first embodiment, except that the communication relay means, profile storing means and profile providing means in the profile management means in the first embodiment are disposed in the terminal. The operation of the second embodiment is similar to that in the first embodiment.

The function of the components in the embodiments of the present invention may be implemented in hardware, or by a computer and a program. The program causes the computer to function as the components in the embodiments described above by supplying the program recorded in a computer-readable storage medium such as a magnetic disk or a semiconductor memory, loading the program to the computer during startup of the computer or the like, and controlling the operation of the computer.

### (Example)

Next, an example will be specifically described.

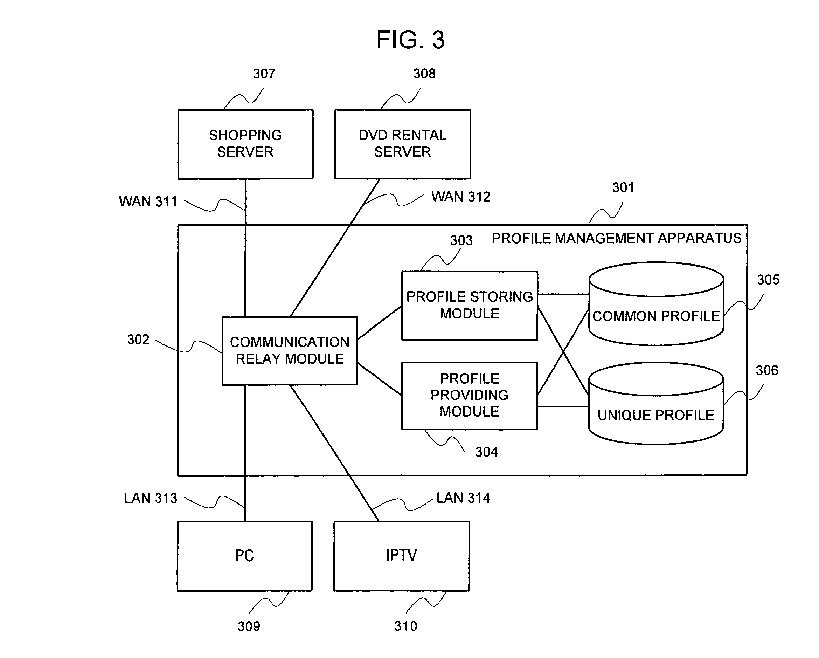

FIG. 3 is a block diagram showing a configuration of an example of the present invention. A profile management apparatus 301 is comprised of a communication relay module 302, a profile storing module 303, a profile providing module 304, a common profile 305, and a unique profile 306.

The profile management apparatus 301 is a server, which comprises at least a central processing unit, a memory, a networking device and a storage device. The profile management apparatus 301 implements the communication relay module 302 in the networking device, implements the profile storing module 303 and profile providing module 304 in the central processing unit, and implements the common profile 305 and unique profile 306 in the storage device by loading a program received via the networking device or that stored in a CD-ROM, a storage device or the like, developing the program on the memory, and interpreting/executing the program developed on the memory by the central processing unit.

The profile management apparatus 301 connects with a shopping server 307 via a WAN (Wide Area Network) 311, connects with a DVD rental server 308 via a WAN 312, connects with a PC 309 via a LAN (Local Area Network) 313, and connects with an IPTV (Internet Protocol Television) 310 via a LAN 314. The communication relay module 302 here is assumed to incorporate therein a web proxy function, and is assumed to be incorporated within a home gateway for use in relay between the LAN and WAN.

For the sake of explanation, it is assumed that the PC 309 and IPTV 310 are owned by the same user. It is also assumed that the shopping server 307 does not recognize the presence of the DVD rental server 308, and vice versa (not shown). Moreover, it is assumed that the shopping server 307 and DVD rental server 308 each have a sufficient range of items commensurate with respective purposes.

Furthermore, it is assumed that the WAN 311, WAN 312, LAN 313, and LAN 314 perform communications according to an Internet protocol, and the shopping server 307 and DVD rental server 308 each accept a processing request through HTTP (Hyper Text Transfer Protocol) and return a processing result through HTTP and HTML (Hyper Text Markup Language).

In addition, it is assumed that the PC 309 connects with a display having a screen size of 2560x1600 pixels (not shown), and is installed in a study that is accessible only by a user of the PC. It is also assumed that the IPTV 310 incorporates therein a display having a screen size of 720x480 pixels, and is installed in a living room in which the user spends the time with his/her family. Moreover, it is assumed that both the PC 309 and IPTV 310 are capable of web browsing or DVD downloading/viewing (rental with an expiration date).

Furthermore, the user is assumed to have such a behavior tendency on the PC 309 that he/she often performs browsing of a portal site for SF (science fiction), purchase of figures of American comics, SF novels, and downloading/viewing of DVD's of SF and robot animation movies. He/she is also assumed to have such a behavior tendency on the IPTV 310 that he/she often uses the IPTV 310 with his/her family, mainly performs viewing of "trendy dramas" and news programs, and downloading/viewing of DVD's of popular movies, in addition to the foregoing. Behavior tendencies common to the PC 309 and IPTV 310 include browsing of web sites relevant to SF, viewing of programs relevant to SF, and viewing of news programs. It is assumed that the behavior tendency is accumulated in the common profile 305 and unique profile 306 beforehand via the profile storing module 303 referring to previous behaviors.

In addition, it is assumed that in the profile, attributes and their values are described in an XML (Extensible Markup Language) file, in which coverage of provision is managed on an attribute-by-attribute basis, associated with automatic provision permission/non-permission, which is information indicating whether provision permission/non-permission by the user is required.

For the sake of explanation, it is assumed here that the user has specified that the screen size of his/her terminal and preference information may be provided to all servers as coverage of provision of his/her profile beforehand, and has specified automatic provision permission/non-permission such that permission/non-permission by the user is unnecessary for all profiles. Furthermore, the profile providing module 304 is assumed to store therein the coverage of provision and automatic provision permission/non-permission specified by the user.

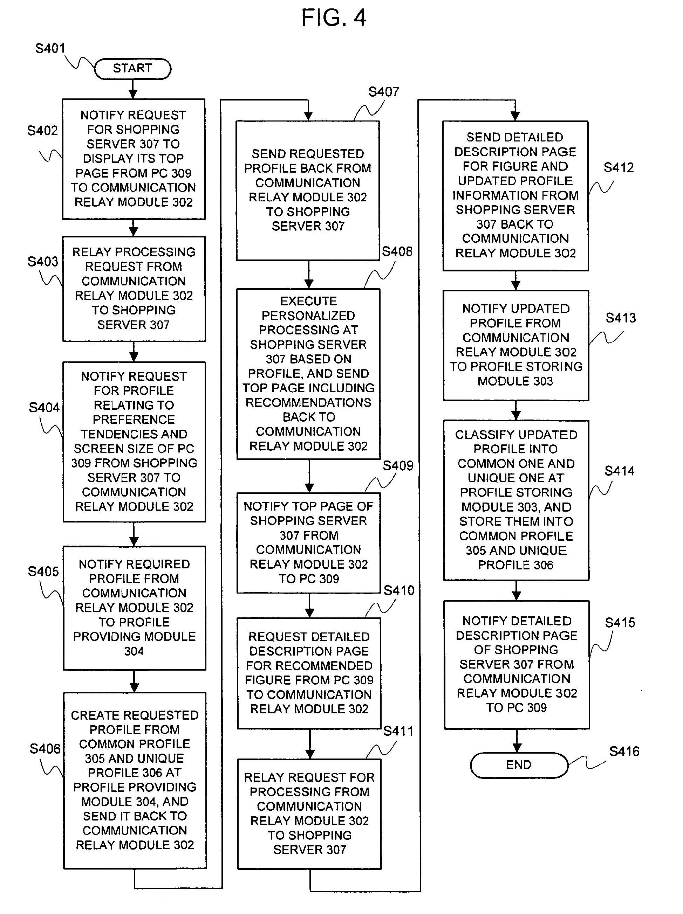

FIG. 4 is a flow chart of the whole system shown in FIG. 3. Once the system has started the process (S401), the PC 309 notifies a processing request for the shopping server 307 to display its top page to the communication relay module 302 (S402). The communication relay module 302 relays the received processing request to the shopping server 307 (S403). The shopping server 307 requests a profile relating to preferences in the PC 309 from the communication relay module 302, for creating recommendations for the accessing user in response to the received processing request (S404). The communication relay module 302 notifies the request for a profile from the shopping server 307 to the profile providing module 304 (S405).

The profile providing module 304 decomposes the request into a request for a profile common to the terminals owned by the user who is using the PC 309, and a request for a profile unique to the PC 309. The profile providing module 304 reads from the common profile 305 a profile having a preference tendency toward SF and robots, and reads from the unique profile 306 a profile including a preference tendency toward American comics and a displayable screen size of 2560x1600 to create a profile including these profiles in combination, and sends it back to the communication relay module 302 (S406). The communication relay module 302 sends the profile created by the profile providing module 304 back to the shopping server 307 (S407).

The shopping server 307 executes personalized processing based on the sent-back profile, and transmits a top page including recommendations as a result of the processing to the communication relay module 302 (S408).

The communication relay module 302 notifies the top page transmitted by the shopping server 307 to the PC 309 (S409). The user is interested in a figure recommended in a recommendation frame in the top page displayed on the PC 309 at S409, and clicks on an anchor to a detailed description of the figure (not shown). The PC 309 then makes a request for a detailed description page for the recommended figure to the communication relay module 302 (S410).

The communication relay module 302 relays the request for the detailed description page to the shopping server 307 (S411). The shopping server 307 updates the profile obtained at S407 described above by appending to the profile the preference tendency towards the currently requested figure, and sends the updated profile and the detailed description page for the figure requested by the PC 309 back to the communication relay module 302 (S412).

The communication relay module 302 notifies the profile updated at S412 described above to the profile storing module 303 (S413). The profile storing module 303 classifies the updated profile into a profile common to the terminals owned by the user and a profile unique to each terminal, and stores the common profile into the common profile 305 and the unique profile into the unique profile 306 (S414).

The communication relay module 302 notifies the detailed description page for the figure generated by the shopping server 307 to the PC 309 (S415). On the PC 309 is then displayed the detailed description page for the figure requested by the PC 309 (not shown).

In a case that the IPTV 310 subsequently makes a personalized processing request to the shopping server 307, the communication relay module 302 transmits, on receipt of a request for a profile of the IPTV 310 by the shopping server 307, the received request to the profile providing module 304 similarly to the case of the request from the PC 309, and the profile providing module 304 reads a profile common to the terminals and a profile unique to the IPTV 310 from the common profile 305 and unique profile 306, respectively, and creates a profile of the IPTV 310 from the read common profile and unique profile in response to the received request. At that time, the common profile 305 has been appended with the information about the figure at S414. A profile including a preference tendency toward SF, robots and the figure is read from the common profile 305, a profile including a preference tendency toward "trendy drams," news and popular movies, and a displayable size of 720x480 are read from the unique profile 306, and a profile is created by combining them. Since a profile created for the PC 309 is thus different from that created for the IPTV 310, recommendations on the IPTV 310 additionally include costumes used in a "trendy drama" and a ticket of a recently released popular movie.

In a case that the PC 309 successively makes processing requests to the shopping server 307 and to the DVD rental server 308, the profile providing module 304 uses, when creating a profile to be provided to the servers, the common profile 305 and unique profile 306 in common irrespective of to which server the profile is to be provided, and therefore, it is possible to incorporate a result of personalized processing executed by one server into personalized processing by the other server (not shown). In this example, for instance, as the PC 309 makes a request for a detailed description of a figure to the shopping server 307, the title of an animation movie in which the figure is featured is recorded in the common profile 305, and when the PC 309 requests a top page of the DVD rental server 308 next time, the animation movie of the title recorded in the common profile 305 as described above is recommended as a DVD recommended by the DVD rental server 308. It is thus possible to share a profile among servers that do not recognize the presence of other servers.

Furthermore, in a case that the PC 309 makes a processing request to the shopping server 307 following the request from the IPTV 310 to the DVD rental server 308, a profile common to the terminals is provided to the servers from the common profile 305, and profiles unique to the PC 309 and IPTV310 are provided to the servers from the unique profile 306; therefore, it is possible to incorporate a result of personalized processing in one server into personalized processing at the other server even for a changed server and a changed terminal (not shown). Specifically, in this example, the updated profile regarding a figure stored at S414 is shared, and a request for a detailed description page for the figure made from the PC 309 to the shopping server 307 is also incorporated when the DVD rental server 308 is accessed from the IPTV 310, so that an animation program featuring the character of the figure is recommended as a program recommended by the DVD rental server 308. Moreover, when displaying a package of the DVD of the recommended animation program at that time, a DVD package having a size most suitable to the IPTV 310 (a size viewable at 720x480) is selected as a DVD package for display.

Moreover, in a case that a second user different from the user of the PC 309 makes a processing request on the IPTV 310 to the DVD rental server 308, the profile providing module 304 reads a profile common to terminals owned by the second user from the common profile 305 and a profile unique to each terminal from the unique profile 306, and the profile providing module 304 creates a profile of the second user from the read profiles and provides it to the server 308. Since the profile of the second user created at the profile providing module 304 is different from that of the user of the PC 309 described above, a personalized service unique to the IPTV 310 for the second user, which is different from the service of a detailed description for a figure described above, will be provided.

While recommendation of programs according to a difference in screen size is made in the example described above, the screen size may be replaced with a communication environment; for example, this may be achieved by a configuration such that, in a case that information that the PC 309 is capable of make communications via an ADSL at 2 Mbps, and information that the IPTV 310 is capable of receiving multi-cast communications by digital broadcasting (30 Mbps at maximum) are stored in the unique profile 306, a program of low bit rate that can be downloaded in real time at an average bit rate of 2 Mbps is recommended when the DVD rental server 308 is accessed from the PC 309, and a program of high bit rate that can be downloaded in real time at an average bit rate of 8 Mbps is recommended when the DVD rental server 308 is accessed by the IPTV 310 as programs recommended by the DVD rental server 308.

In the examples described above, a profile provided by the profile providing module 304 to the shopping server 307 at S406 may be recorded as a history and notified to the user. A method of notifying may include displaying the fact on a display of the PC 309 via the communication relay module 302. In the example described above, since the user specifies coverage of provision beforehand such that the terminal screen size and preference information may be provided to all servers, the profile providing module 304 makes no confirmation regarding provision permission/non-permission to the user every time at S406. In a case that the user specifies automatic provision permission/non-permission indicating that user's provision permission/non-permission is required when providing preference information in the examples described above, the profile providing module 304 may display, when providing a profile at S406, a dialog on the display of the PC 309 or IPTV 310 via the communication relay module 302, inquire provision permission/non-permission for the profile by the user, and the profile providing module 304 or the like may decide whether the profile should be provided depending upon the provision permission/non-permission for the profile by the user.

While in the examples described above, a PC and an IPTV are exemplified as terminals, the terminals may be a mobile terminal, a television image receiver, and the like. This is presented merely by way of example and shall not be construed as limiting.

As described above, the present invention provides a method of controlling an apparatus connected to a server for providing an information processing service unique to each of a plurality of terminals in response to requests transmitted by the plurality of terminals, the method comprising the steps of: by the above-described apparatus, storing information unique to each of the above-described terminals associated with identification information for each of the above-described terminals into unique service profile storage means; by the above-described apparatus, storing information common to each of the above-described terminals into common service profile storage means; by the above-described apparatus, receiving, from the above-described server, a request for transmitting a service profile for defining details of an information processing service to be provided to a terminal that transmitted a request for the above-described information processing service; and by the above-described apparatus, transmitting, to the above-described server, the information unique to the above-described terminal stored in the above-described unique service profile storage means associated with the identification information for the above-described terminal contained in the above-described transmission request and the information common to each terminal stored in the above-described common service profile storage means, as the above-described service profile.

In the method of controlling described above, the above-described apparatus is connected to a plurality of the above-described servers, and the method further comprises the steps of: by the above-described apparatus, storing provision permission/non-permission information that defines provision permission/non-permission for the above-described service profile for each of the above-described servers; by the above-described apparatus, when transmitting to the above-described server the unique information stored in the above-described unique service profile storage means and the common information stored in the above-described common service profile storage means as the above-described service profile, deciding whether to transmit the above-described service profile based on the provision permission/non-permission information for the above-described server; and by the above-described apparatus, transmitting the above-described service profile to the above-described server depending upon a result of the above-described decision.

In the method of controlling described above, the above-described apparatus is connected to each of the above-described terminals, and the method further comprises the steps of: by the above-described apparatus, when transmitting the above-described service profile to the above-described server, transmitting, to a terminal that transmitted the above-described request, a request for confirmation of provision permission/non-permission for the above-described service profile for the above-described server; by the above-described apparatus, receiving, from the above-described terminal, a reply to the above-described request for confirmation; by the above-described apparatus, deciding whether to transmit the above-described service profile based on the above-described reply; and by the above-described apparatus, transmitting the above-described service profile to the above-described server depending upon a result of the above-described decision.

In the method of controlling described above, the above-described unique service profile storage means stores therein, for each user obtaining the above-described information processing service, identification information for the user and identification information for a terminal used by the above-described user associated with information unique to the above-described terminal specified for each above-described user; the above-described common service profile storage means stores therein, for each user obtaining the above-described information processing service, identification information for the user associated with information common to terminals specified for each above-described user; and the above-described transmission request includes the identification information for a terminal and identification information for a user who is using the above-described terminal, and the method further comprises the step of: by the above-described apparatus, transmitting, to the above-described server, the above-described unique information stored in the above-described unique service profile storage means associated with the above-described identification information for a terminal and identification information for a user of the above-described terminal contained in the above-described transmission request, and the above-described common information stored in the above-described common service profile storage means associated with the above-described identification information for a user, as the above-described service profile.

In the method of controlling described above, the above-described apparatus is connected to a plurality of the above-described servers, and the method further comprises the steps of: by the above-described apparatus, when transmitting the above-described service profile to the above-described server, storing identification information for the above-described server and identification information for a terminal contained in the above-described transmission request associated with the service profile transmitted to the above-described server into profile provision history storage means; and by the above-described apparatus, transmitting a service profile stored in the above-described profile provision history storage means and identification information for a server to a terminal identified by the identification information for a terminal associated with the above-described service profile and the above-described identification information for a server.

Moreover, the present invention provides a terminal in a service providing system comprising: a plurality of terminals; a server for providing an information processing service unique to each of the above-described plurality of terminals in response to requests transmitted from the plurality of terminals; unique service profile storage means for storing therein information unique to each of the above-described terminals associated with identification information for each of the above-described terminals; and common service profile storage means for storing therein information common to each of the above-described terminals, the above-described terminal comprising: request transmitting means for transmitting a request to the above-described server for obtaining provision of an information processing service from the above-described server; receiving means for receiving, from the above-described server, a request for transmitting a service profile for defining details of an information processing service to be provided by the above-described server to the above-described terminal; and service profile transmitting means for transmitting to the above-described server the above-described unique information stored in the above-described unique service profile storage means associated with the above-described identification information for a terminal, and the above-described common information stored in the above-described common service profile storage means, as the above-described service profile.

The terminal described above further comprises: provision permission/non-permission information storage means for storing therein provision permission/non-permission information that defines provision permission/non-permission for the above-described service profile for each above-described server; and deciding means for, when transmitting the above-described service profile to the above-described server, deciding whether to transmit it based on the above-described provision permission/non-permission information for the above-described server, wherein the above-described service profile transmitting means transmits the above-described service profile to the above-described server depending upon a result of the decision by the above-described deciding means.

The terminal described above further comprises: input means for accepting input of information indicating the provision permission/non-permission for the above-described service profile for the above-described server; and deciding means for deciding whether to transmit the above-described service profile based on the information indicating the above-described provision permission/non-permission, wherein the above-described service profile transmitting means transmits the above-described service profile to the above-described server depending upon a result of the decision by the above-described deciding means.

Furthermore, the present invention provides a service providing system comprising a server for providing an information processing service unique to each of a plurality of terminals in response to requests transmitted by the plurality of terminals, the above-described server comprising: unique service profile storage means for storing therein information unique to each of the above-described terminals associated with identification information for each of the above-described terminals; common service profile storage means for storing therein information common to each of the above-described terminals; receiving means for receiving, from the above-described server, a request for transmitting a service profile for defining details of an information processing service to be provided to a terminal that transmitted a request for the above-described information processing service; and transmitting means for transmitting, to the above-described server, the information unique to the above-described terminal stored in the above-described unique service profile storage means associated with the identification information for the above-described terminal contained in the above-described transmission request and the information common to each terminal stored in the above-described common service profile storage means, as the above-described service profile.

Further, the service providing system described above comprises at least two the above-described apparatuses, and a first apparatus and a second apparatus are connected to the above-described common service profile storage means via a network.

Moreover, the present invention provides an apparatus connected to a server for providing an information processing service unique to each of a plurality of terminals in response to requests transmitted by the plurality of terminals, wherein the above-described apparatus stores information unique to each of the above-described terminals associated with identification information for each of the above-described terminals into unique service profile storage means; stores information common to each of the above-described terminals into common service profile storage means; receives, from the above-described server, a request for transmitting a service profile for defining details of an information processing service to be provided to a terminal that transmitted a request for the above-described information processing service; and transmits, to the above-described server, the information unique to the above-described terminal stored in the above-described unique service profile storage means associated with the identification information for the above-described terminal contained in the above-described transmission request and the information common to each terminal stored in the above-described common service profile storage means, as the above-described service profile.

Moreover, the present invention provides a program causing an apparatus connected to a server for providing an information processing service unique to each of a plurality of terminals in response to requests transmitted by the plurality of terminals, to execute the processing of: storing information unique to each of the above-described terminals associated with identification information for each of the above-described terminals into unique service profile storage means; storing information common to each of the above-described terminals into common service profile storage means; receiving, from the above-described server, a request for transmitting a service profile for defining details of an information processing service to be provided to a terminal that transmitted a request for the above-described information processing service; and transmitting, to the above-described server, the information unique to the above-described terminal stored in the above-described unique service profile storage means associated with the identification information for the above-described terminal contained in the above-described transmission request and the information common to each terminal stored in the above-described common service profile storage means, as the above-described service profile.

The present invention may be applied to personalized services in commercial services represented by web services.

The present application claims priority based on Japanese Patent Application No. 2007-248358 filed on September 26, 2007, the disclosure of which is incorporated herein in its entirety.

## Claims

1. A service providing method comprising a service providing step of providing a service in response to a service providing request from a terminal based on a unique profile that is information on a service to be provided uniquely at said terminal and a common profile that is information on a service to be provided in common at all terminals owned by a user who is an owner of said terminal.

2. A service providing method according to claim 1, wherein the method comprises an updating step of updating the unique profile and common profile based on a service provided in response to a service providing request.

3. A service providing method according to claim 1 or claim 2, wherein the method comprises a step of transmitting a unique profile and a common profile to a server for providing a service depending upon a result of decision made based on provision permission/non-permission information that determines whether to notify said unique profile and common profile to said server.

4. A service providing method according to claim 1 or claim 2, wherein the method comprises:
a transmitting step of, when notifying a unique profile and a common profile to a server for providing a service, transmitting a request for confirmation of whether to notify said profiles to said server to a terminal that transmitted a service providing request; and
a step of transmitting said unique profile and common profile to said server depending upon a result of confirmation transmitted in response to said request for confirmation.

5. A service providing method according to any one of claim 1 to claim 4, wherein the method comprises:
a recording step of recording a unique profile and a common profile notified to a server for providing a service as profile notification history information, for each server to which the notification was made; and
a transmitting step of transmitting said recorded profile notification history information to said terminal.

6. A service providing system comprising a service provider for providing a service in response to a service providing request from a terminal based on a unique profile that is information on a service to be provided uniquely at said terminal and a common profile that is information on a service to be provided in common at all terminals owned by a user who is an owner of said terminal.

7. A service providing system according to claim 6, wherein the system comprises an updating unit for updating the unique profile and common profile based on a service provided in response to a service providing request.

8. A service providing system according to claim 6 or claim 7, wherein the system comprises a transmitter for transmitting a unique profile and a common profile to a server for providing a service depending upon a result of decision made based on provision permission/non-permission information that determines whether to notify said unique profile and common profile to said server.

9. A service providing system according to claim 6 or claim 7, wherein the system comprises:
a transmitter for, when notifying a unique profile and a common profile to a server for providing a service, transmitting a request for confirmation of whether to notify said profiles to said server to a terminal that transmitted a service providing request; and
a transmitter for transmitting said unique profile and common profile to said server depending upon a result of confirmation transmitted in response to said request for confirmation.

10. A service providing system according to any one of claim 6 to claim 9, wherein the system comprises:
a recorder for recording a unique profile and a common profile notified to a server for providing a service as profile notification history information, for each server to which the notification was made; and
a transmitter for transmitting said recorded profile notification history information to said terminal.

11. A server comprising a service provider for providing a service in response to a service providing request from a terminal based on a unique profile that is information on a service to be provided uniquely at said terminal and a common profile that is information on a service to be provided in common at all terminals owned by a user who is an owner of said terminal.

12. An information management apparatus comprising a notification module for notifying, in response to a service providing request from a terminal, a unique profile that is information on a service to be provided uniquely at said terminal and a common profile that is information on a service to be provided in common at all terminals owned by a user who is an owner of said terminal, to a server for providing a service to said terminal.

13. A terminal comprising a transmitter for transmitting a unique profile that is information on a service to be provided uniquely at his or her self-terminal and a common profile that is information on a service to be provided in common at all terminals owned by a user who is an owner of his or her self-terminal, to a server for providing said service to his or her self-terminal.

14. A program for a server wherein said program causes said server to execute:
processing of providing a service in response to a service providing request from a terminal based on a unique profile that is information on a service to be provided uniquely at said terminal and a common profile that is information on a service to be provided in common at all terminals owned by a user who is an owner of said terminal.

15. A program for an information management apparatus wherein said program causes said information management apparatus to execute:
processing of notifying, in response to a service providing request from a terminal, a unique profile that is information on a service to be provided uniquely at said terminal and a common profile that is information on a service to be provided in common at all terminals owned by a user who is an owner of said terminal, to a server for providing a service to said terminal.

16. A program for a terminal wherein said program causes said terminal to execute:
processing of transmitting a unique profile that is information on a service to be provided uniquely at his or her self-terminal and a common profile that is information on a service to be provided in common at all terminals owned by a user who is an owner of his or her self-terminal, to a server for providing said service to his or her self-terminal.
